# EUROPÄISCHE PATENTSCHRIFT

(11) **EP 3 374 731 B1**
(45) Veröffentlichungstag und Bekanntmachung des Hinweises auf die Patenterteilung: **03.04.2019**
(21) Anmeldenummer: 16794662.3
(22) Anmeldetag: 14.11.2016
(51) Int. Cl.: G01B 9/02, G01M 11/00

(54) **VERKIPPTE OBJEKTWELLEN NUTZENDES UND EIN FIZEAU-INTERFEROMETEROBJEKTIV AUFWEISENDES INTERFEROMETER**
INTERFEROMETER USING TILTED OBJECT WAVES AND COMPRISING A FIZEAU INTERFEROMETER OBJECTIVE
INTERFÉROMÈTRE UTILISANT DES ONDES D'OBJET INCLINÉES ET COMPRENANT UN OBJECTIF D'INTERFÉROMÈTRE DE FIZEAU

(30) Priorität: 12.11.2015 DE 102015222366
(43) Veröffentlichungstag der Anmeldung: 19.09.2018
(73) Patentinhaber: Universität Stuttgart, 70174 Stuttgart (DE)
(72) Erfinder: BAER, Goran, 10247 Berlin (DE); PRUSS, Christof, 73760 Ostfildern (DE); OSTEN, Wolfgang, 70569 Stuttgart (DE)
(74) Vertreter: DREISS Patentanwälte PartG mbB
(86) Internationale Anmeldenummer: PCT/EP2016/077610
(87) Internationale Veröffentlichungsnummer: WO 2017/081328

(56) Entgegenhaltungen:
- WO-A1-2004/051183
- CN-A- 102 607 454
- CN-A- 103 759 668
- US-A1- 2004 141 184
- US-A1- 2010 134 801
- W. OSTEN ET AL: "Testing aspheric lenses: New approaches", OPTOELECTRONICS, INSTRUMENTATION AND DATA PROCESSING., Bd. 46, Nr. 4, 1. August 2010 (2010-08-01) , Seiten 329-339, XP055337077, US ISSN: 8756-6990, DOI: 10.3103/S8756699010040059
- Goran Bastian Baer ET AL: "Measurement of Aspheres and Free-Form Surfaces with the Tilted-Wave-Interferometer" In: "Fringe 2013", 1. Januar 2014 (2014-01-01), Springer Berlin Heidelberg, Berlin, Heidelberg, XP055254373, ISBN: 978-3-642-36359-7 Seiten 87-95, DOI: 10.1007/978-3-642-36359-7_10, das ganze Dokument

## Beschreibung

Die vorliegende Erfindung betrifft ein Interferometer nach dem Oberbegriff des Anspruchs 1 sowie ein Verfahren nach dem unabhängigen Verfahrensanspruch. Ein solches Interferometer wird auch als Tilted Wave Interferometer (TWI) bezeichnet. Die technische Grundlage der vorliegenden Erfindung ist ein am Institut für Technische Optik (ITO) der Universität Stuttgart erfundenes Verfahren zur Vermessung der Oberfläche von Asphären und Freiformflächen. Es verwendet ein Ensemble von zueinander verkippten Wellenfronten, um die Abweichung des Prüflings von der bestpassenden Sphäre lokal zu kompensieren. Das Ensemble besteht typischerweise aus vielen (z.B. 49) zueinander verkippten Wellenfronten und unterscheidet sich dadurch grundlegend von anderen Interferometern, die zum Beispiel zur Erzeugung von zwei orthogonal zueinander polarisierten Wellenfronten nur zwei verkippte Wellenfronten einsetzen. Siehe zum Beispiel WO 2004/051183. Eine beispielhafte Ausführung wird in der DE 10 2006 057 606 B4 beschrieben. Das dort vorgestellte Tilted Wave Interferometer weist ein Punktlichtquellen-Array (PLQA) und ein im Lichtweg von Licht, das von dem PLQA ausgeht, hinter dem PLQA angeordnetes optisches System aus einem Kollimator, einem optionalen Interferometerobjektiv, einem Strahlteiler, einer Interferometerblende, einer Abbildungsoptik und einer Kamera auf, wobei die Interferometerblende näherungsweise in der objektseitigen Brennebene der Abbildungsoptik, die auch als Fourierebene bekannt ist, angeordnet ist.

Bekannte Ausführungen des TWI erzeugen ihre Interferogramme durch Überlagerung der vom Prüfling reflektierten Objektwellenfronten mit einer zu allen Objektwellenfronten kohärenten Referenzwelle, die durch Strahlteilung aus dem Licht einer Lichtquelle vor der Erzeugung der verkippten Objektwellenfronten generiert wird. Bei der aus der DE DE 10 2006 057 606 B4 bekannten Ausführung wird diese Referenzwelle separat geführt und erst nachdem die vom Prüfling reflektierten Objektwellenfronten das Interferometerobjektiv und den Kollimator passiert haben, wieder so per Strahlteiler eingekoppelt, so dass sich auf der Kamera auswertbare Interferenzstreifen bilden, aus denen mit den in DE 10 2006 057 606 B4 beschriebenen Verfahren auf die Formabweichung des Prüflings zurückgeschlossen werden kann.

Aufgrund der separaten Einkopplung der Referenzwellenfront ergeben sich starke Unterschiede in den optischen Wegen der Referenzwelle und den Objektwellen. Somit ergibt sich zum Beispiel durch thermisch induzierte Veränderungen des Aufbaus oder lokale Brechungsindexschwankungen der Luft eine nachteilige Instabilität der Phasenunterschiede zwischen der Referenzwelle und den Objektwellen.

Die seit dem 19. Jahrhundert bekannten und aufgrund ihrer Stabilität sehr verbreiteten Fizeau-Interferometer erzeugen die Referenzwelle durch eine strahlteilende Fizeau-Fläche, deren Oberflächennormalen näherungsweise senkrecht zu denen der einfallenden Wellenfront stehen. Da diese teilverspiegelte Fizeau-Fläche zumeist die letzte Fläche vor dem Prüfling ist, beispielsweise in einem Fizeau-Objektiv (englisch: "transmission sphere"), und die Strahlen in der zumeist verwendeten Prüfkonfiguration, dem sogenannten "Nulltest", senkrecht auf den Prüfling fallen und damit in sich zurückreflektiert werden, sind Referenz-und Objektwellenfront nur auf dem kurzen Stück zwischen Fizeau-Fläche und Prüfling getrennt und durchlaufen ansonsten das Interferometer auf nahezu identischen Wegen. Man nennt Fizeau-Interferometer daher englisch auch "common-path"-Interferometer. Da sich in den Interferogrammen lediglich die Differenz zwischen Referenz- und Objektwellenfront abbildet, wirkt sich die Eigenschaft der gemeinsamen Wege positiv auf die Reproduzierbarkeit der Messergebnisse aus.

Für die Auswertung der Interferogramme wurde im Tilted Wave Interferometer aus der DE 10 2006 057 606 B4 ein Phasenschiebeverfahren verwendet, wobei die Referenzwelle mit einem Piezoaktuator in mehreren Schritten verschoben und sequentiell ein Bilderstapel aufgenommen wird. Das Phasenschieben führt durch den sequentiellen Modus zu einer langen Messzeit. Außerdem sind solche Verfahren anfällig gegenüber Schwingungen, was die Verwendung des Interferometers beispielsweise in der Fertigung erschwert.

Weitere TWI sind aus der Veröffentlichung W. Osten et al., Testing aspheric lenses: New approaches, Optoelectronics, Instruments and Data Processing, Bd. 46, Nr. 4, 1.August 2010, Seiten 329-339, XP055337077, US ISSN: 8756-6990, DOI: 10.3103/S8756699010040059, der CN 103 759 668 A und der CN 102 607 454 A bekannt. Von dem Stand der Technik nach der CN 102 607 454 A unterscheidet sich die vorliegende Erfindung in ihren Vorrichtungsaspekten durch die kennzeichnenden Merkmale des Anspruchs 1 und in ihren Verfahrensaspekten durch die kennzeichnenden Merkmale des unabhängigen Verfahrensanspruchs.

Durch die für jede Auswahl erfolgende Erzeugung einer Auswahl-eigenen Referenzwelle wird vermieden, dass sich Wellen, die von mehreren Fizeau-Reflexen ausgehen, auf dem Detektor störend überlagern. Bei einem TWI nach der CN 102 607 454 A, das ein Fizeau-Objektiv in Verbindung mit einer bei jeder Messwertaufnahme immer gleichen Referenzwelle verwendet, dürfte es dagegen zu störend nachteiligen Überlagerungen mit von mehreren Fizeau-Reflexen ausgehenden Wellen kommen.

Dadurch, dass das Interferometer dazu eingerichtet ist, die optisch glatte Oberfläche bei ihrer Vermessung mit verschiedenen Auswahlen von sich unterscheidenden Objektwellen zu beleuchten, wobei jede Auswahl eine eigene Referenzwelle erzeugt, die bei einer mit einer anderen Auswahl erfolgenden Beleuchtung ausgeschaltet ist, wird dieses Problem der Störreflexe vermieden. Weiterhin ergeben sich die folgenden Vorteile gegenüber der DE 10 2006 057 606 B4. Es ist nicht erforderlich, dass ein individuell für dieses Interferometer gefertigtes Interferometer-Objektiv verwendet wird. Die bei der Erfindung verwendbaren Fizeau-Objektive sind auf dem Markt weit verbreitet und entsprechend kostengünstiger als solche Spezialanfertigungen.

Durch die Verwendung eines Fizeau-Objektivs als Interferometerobjektiv ist eine an der teilweise reflektierenden Fläche des Fizeau-Objektivs auftretende Reflexion der Objektwelle als Quelle der Referenzwellenfront verwendbar. Bei einer solchen Erzeugung der Referenzwelle unterscheiden sich die im erfindungsgemäßen Interferometer verlaufenden optischen Wege für Objektwellen und Referenzwellen mit der Ausnahme des Weges von der Fizeau-Fläche zum Prüfling nur leicht (common path design). Daraus resultieren Vorteile in Bezug auf die Stabilität der Kalibrierung, sowie in Bezug auf die Empfindlichkeit des Interferometers gegen Brechungsindexschwankungen der Luft oder andere Einflüsse wie thermische Verformungen des Aufbaus oder Schwingungen. Die durch das common-path-Design verbesserte Stabilität der Phasenunterschiede zwischen Objektwelle und Referenzwelle erschließt neue Möglichkeiten für die Auswertung der Interferogramme.

Der Aufbau des Interferometers ist insgesamt kompakter und besteht aus weniger optischen Komponenten als das Interferometer aus der DE 10 2006 057 606 B4.

Bei dem Interferometer sind Phaseschiebeverfahren zur Auswertung der Phase nach wie vor möglich, allerdings können als alternative Option auch Trägerfrequenzverfahren zur Bestimmung der Phase verwendet werden, was in bestimmten Situationen vorteilhaft ist.

Beim bekannten Tilted Wave Interferometer Verfahren wird der Prüfling mit verschiedenen Auswahlen A₁ ... A_{N} von Objektwellen beleuchtet und jeweils ein Interferogramm aufgenommen. Eine typische Größe für die Anzahl N an Auswahlen, die bei einem Tilted Wave Interferometer verwendet wird, ist 4. Durch die Messdatenaufnahme mit diesen 4 Auswahlen an Objektwellenfronten wird vermieden, dass sich die auf dem Detektor auftreffenden Objektwellenfronten überlappen und dadurch die Interferogramme nicht mehr auswertbar werden. Da die Referenzwelle separat zugeführt wird, beleuchtet diese bei allen Aufnahmen mit den verschiedenen Auswahlen von Objektwellen den Detektor und führt somit zu den gewünschten Interferogrammen.

Das Ersetzen der beim aus der DE 10 2006 057 606 B4 bekannten Tilted Wave Interferometer verwendeten speziellen Interferometerobjektive durch eine Fizeau-Optik würde zunächst dazu führen, dass die Fizeau-Fläche Reflexe erzeugt, die im normalen Betrieb des Tilted Wave Interferometers nicht als Referenzwelle verwendet werden können, sondern stören würden. Zwar würde beispielsweise Auswahl A₁ eine Objektwellenfront enthalten, die an der Fizeau-Fläche einen Reflex erzeugen würde, der als Referenzwellenfront genutzt werden könnte. Beispielsweise wäre dies bei einer bekannten Ausführung eine Objektwellenfront, die durch eine Punktlichtquelle auf der optischen Achse erzeugt wird und unverkippt parallel zur optischen Achse propagiert. Sobald jedoch eine andere Auswahl A₂ ... A_{N} geschaltet wird, ist diese Wellenfront prinzipbedingt ausgeschaltet und kann demnach keine Referenzwellenfront erzeugen.

Die erfindungsgemäße Lösung zu diesem Problem ist, dass jede Auswahl eine eigene Referenzwelle erzeugt. Die Auswahlen der Objektwellenfronten und die Lage und Größe der Interferometerblende werden so gewählt, dass exakt eine Objektwellenfront pro Auswahl an der Fizeau-Fläche eine Referenzwellenfront erzeugt, die die Interferometer-Blende passiert und auf den Detektor, vorzugsweise eine Kamera, gelangt. Die von den anderen Objektwellenfronten der Auswahl erzeugten Reflexe an der Fizeau-Fläche werden von der Interferometerblende geblockt.

Es ist bekannt, dass die von verschiedenen Punkten P1 und P2 in der Fourier-Ebene der Abbildungsoptik ausgehende Kugelwellen am Detektor jeweils ebene Wellen mit unterschiedlichen Propagationsrichtungen bilden. Wenn zwei ebene Wellenfronten auf dem Detektor so interferieren, dass ihr Interferenzstreifenmuster einen Streifenabstand von zwei Pixellängen hat, erfüllt die Detektion des Interferogramms das aus der Signalverarbeitung bekannte Nyquist-Kriterium. Der Abstand der zugehörigen Kugelwellenzentren P1 - P2 in der Fourier-Ebene sei dann mit a bezeichnet. Die Größe a ist abhängig von der Abbildungsoptik und der Pixelgröße des verwendeten Interferometers.

Eine bevorzugte Ausgestaltung zeichnet sich dadurch aus, dass die starre Anordnung der Punktlichtquellen ein regelmäßiges Raster bildet und dass sich am Durchstoßpunkt der optischen Achse des Interferometers mit diesem regelmäßigen Raster keine Punktlichtquelle befindet und dass n = drei oder mehr Punktlichtquellen symmetrisch in gleichem Abstand um den Durchstoßpunkt angeordnet sind, deren Objektwellen die Referenzwellen am Fizeauobjektiv oder der Fizeauplatte erzeugen.

Ferner ist bevorzugt, dass die Interferometerblende während der Messung nicht beweglich und so ausgelegt ist, dass sie gleichzeitig die Referenzwellenfronten, die von mehreren Objektwellenfronten erzeugt werden, auf den Detektor gelangen lassen würde, und dass das Interferometer eine geeignete Vorrichtung aufweist, vorzugsweise ein bewegliches Blendenarray, die die Auswahlen der Objektwellenfronten so festlegt, dass pro Messwertaufnahme nur eine Objektwellenfront eine Referenzwellenfront erzeugt, die zum Detektor gelangt.

Bevorzugt ist auch, dass zur Auswahl der genau einen Referenzwellenfront auf dem Detektor ein Blendenarray zur Auswahl der diesen Referenzwellenfront erzeugenden Objektwellenfront vorhanden ist.

Bevorzugt ist auch, dass die Interferometerblende beweglich und so positionierbar ist, dass für jede Messwertaufnahme das Licht genau einer Referenzwellenfront zum Detektor gelangt.

Eine weitere bevorzugte Ausgestaltung zeichnet sich dadurch aus, dass die Interferometerblende so dimensioniert ist, dass sie nur Objektwellen mit Einfallwinkeln auf den Detektor leitet, die dem Einfallswinkel der Referenzwelle so ähnlich sind, dass auf dem Detektor Teilbereiche mit auswertbaren Streifen in den Interferogrammen generiert werden.

Ferner ist bevorzugt, dass das Interferometer so ausgelegt ist, dass sich aus verschiedenen Objektwellen resultierende Teilbereiche des Interferogramms mit auswertbaren Streifen auf dem Detektor überlappen.

Eine weitere bevorzugte Ausgestaltung zeichnet sich durch ein Punktlichtquellen-Array und ein im Lichtweg von Licht, das von dem Punktlichtquellen-Array ausgeht, hinter dem Punktlichtquellen-Array angeordnetes optisches System aus einem Kollimator, einem Interferometerobjektiv als Mittel zum Beleuchten, und durch einen Strahlteiler, eine Interferometerblende und eine Abbildungsoptik als Mittel zum Überlagern und durch eine Kamera (K) aus, wobei die Interferometerblende in der Fourierebene der Abbildungsoptik zwischen der Abbildungsoptik und dem Strahlteiler angeordnet ist, und wobei die Lichtquellen in dem Lichtquellen-Array in Zeilen und Spalten in einem regelmäßigen Abstand voneinander angeordnet sind, und wobei eine zentrale Achse des Interferometers eine Normale eines n-Ecks bildet, auf dessen Ecken je eine von n einander benachbarten Punktlichtquellen liegt, und wobei die Normale auf einem Mittelpunkt des n-Ecks steht.

Bevorzugt ist auch, dass die Interferometerblende eine n-eckige oder kreisförmige Öffnung besitzt.

Ferner ist bevorzugt, dass die Kantenlänge der n-eckigen Öffnung mindestens so groß ist wie eine Kantenlänge a, bei der die Streifendichte des Interferogramms, welches entsteht, wenn eine Wellenfront, deren Gradient durch die Interferometerblende begrenzt ist, mit einer ebenen Referenzwelle interferiert, maximal die halbe Nyquistfrequenz der Kamera erreicht.

Eine weitere bevorzugte Ausgestaltung zeichnet sich dadurch aus, dass die Kantenlänge a noch um eine zusätzliche Länge 2 mal ε größer ist, wobei ε kleiner als a/10 ist.

Bevorzugt ist auch, dass das Interferometer einen zusätzlichen Interferometerarm aufweist, der eine zentrale, auf einer optischen Achse liegende Punktlichtquelle erzeugt.

Eine weitere bevorzugte Ausgestaltung zeichnet sich dadurch aus, dass der zusätzliche Interferometerarm einen Strahlteiler, einen Spiegel, ein Fernrohr, bestehend aus einem Mikroskopobjektiv und einer Linse, eine Linse und einen weiteren Strahlteiler aufweist, wobei der Strahlteiler dazu eingerichtet und angeordnet ist, Licht eines Lasers des Interferometers über den zusätzlichen Spiegel in das Fernrohr umzulenken, das Fernrohr dazu eingerichtet ist, das vom Spiegel her einfallende Lichtbündel aufzuweiten und auf die zusätzliche Linse zu richten, welche dazu eingerichtet und angeordnet ist, das aufgeweitete Lichtbündel zu fokussieren und auf den weiteren Strahlteiler zu richten, wobei dieser im Strahlengang des Interferometers zwischen der Interferometerblende und der Abbildungsoptik im Kameraarm des Interferometers angeordnet und dazu eingerichtet ist, von der zusätzlichen Linse her einfallendes Licht in den Kameraarm des Interferometers einzukoppeln.

Bevorzugt ist auch, dass das Interferometer einen Fizeau-Objektiv-Aktuator aufweist, der dazu eingerichtet ist, das Fizeau-Objektiv längs der optischen Achse zu verschieben.

Ferner ist bevorzugt, dass das Interferometer einen ersten Shutter und einen zweiten Shutter aufweist, welche dazu eingerichtet und angeordnet sind, jeweils einen vom Stahlteiler ausgehenden Strahlengang gesteuert zu blockieren oder nicht zu blockieren.

Bevorzugt ist auch, dass der erste Shutter zwischen dem Strahlteiler und dem Mikroskopobjektiv des Interferometers angeordnet ist und dass der zweite Shutter zwischen dem Strahlteiler und dem zusätzlichen Spiegel angeordnet ist.

Mit Blick auf die Verfahrensaspekte ist bevorzugt, dass eine Messung aus mehreren Messwertaufnahmen besteht und dass für die verschiedenen Messwertaufnahmen verschiedene Auswahlen von sich unterscheidenden Objektwellen verwendet werden dergestalt, dass durch die verschiedenen Messwertaufnahmen jeder zu vermessende Punkte der Oberfläche mindestens einmal durch eine Objektwelle beleuchtet wird, die zum Detektor gelangt.

Weitere Vorteile ergeben sich aus den abhängigen Ansprüchen, der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung, die in den unabhängigen Ansprüchen 1 und 15 definiert ist, zu verlassen.

Ausführungsbeispiele der Erfindung sind in den Zeichnungen dargestellt und werden in der nachfolgenden Beschreibung näher erläutert. Dabei bezeichnen gleiche Bezugszeichen in verschiedenen Figuren jeweils gleiche oder zumindest ihrer Funktion nach vergleichbare Elemente. Es zeigen, jeweils in schematischer Form:
- Figur 1: ein bekanntes Tilted Wave Interferometer;
- Figur 2: eine Anordnung der Lichtaustrittseite eines Punktlichtquellenarrays beim Stand der Technik;
- Figur 3: ein Ausführungsbeispiel eines erfindungsgemäßen Interferometers mit einem Objektstrahlengang;
- Figur 4: eine Anordnung der Lichtaustrittsseite eines Punktlichtquellenarrays bei der Erfindung;
- Figur 5: eine bevorzugte Ausgestaltung einer bei einem Ausführungsbeispiel der Erfindung verwendeten Interferometerblende;
- Figur 6: das Ausführungsbeispiel aus der Figur 3 mit einem Referenzstrahlengang;
- Figur 7: eine bevorzugte Ausgestaltung einer bei einem Ausführungsbeispiel verwendeten Interferometerblende; und

Figur 8 ein weiteres Ausführungsbeispiel der Erfindung. Im Einzelnen zeigt die Figur 1 ein bekanntes Tilted Wave Interferometer, das weitgehend dem in der DE 10 2006 057 606 B4 beschriebenen Interferometer entspricht.

Der Strahl einer kohärenten linear polarisierten Laserquelle 1 durchläuft ein A/2-Plättchen 2 und wird von einem polarisierenden Strahlteiler-Würfel 3 in einen Prüf- und einen Referenzstrahl geteilt. Der Prüfstrahl wird durch ein Strahlaufweitungsmittel, beispielsweise ein Kepler-Fernrohr, welches aus einem Mikroskopobjektiv 4 sowie einer Kollimationslinse 5 besteht, aufgeweitet. Der aufgeweitete Strahl beleuchtet ein Punktlichtquellenarray 6, welches aus einem Substrat besteht, auf dessen dem Mikroskopobjektiv zugewandter Vorderseite ein Mikrolinsenarray und auf dessen der Vorderseite gegenüberliegenden Rückseite ein Lochblendenarray 7 angebracht ist.

Das Lochblendenarray 7 ist relativ zum Punktlichtquellenarray verschieblich, und deckt in eine Stellung jeweils jede zweite Punktlichtquelle in jeder Zeile und Spalte intransparent ab, wobei es für die übrigen Punktlichtquellen transparent ist. Ein solches Punktlichtquellenarray wird in der eingangs genannten DE 10 2006 057 606 A1 ausführlich beschrieben.

Durch Verschieben des Lochblendenarrays um ein Rastermaß, das dem Abstand von je zwei benachbarten Punktlichtquellen einer Zeile entspricht und dass dann auch dem dazu gleichen Abstand von je zwei benachbarten Punktlichtquellen einer Spalte entspricht, lassen sich in vier Schritten alle Punktlichtquellen aktivieren, wobei nach jedem Schritt jeweils jede vierte Punktlichtquelle durch eine zugehörige Öffnung des Lochblenden-Arrays hindurch leuchtet und die übrigen Lichtquellen alle abgedeckt sind. Unter einer aktivierten Punktlichtquelle wird dabei eine lichtemittierende und durch das Lochblendenarray nicht abgedeckte Punktlichtquelle verstanden.

Kugelwellenfronten, welche von den einzelnen aktiven Punktlichtquellen erzeugt werden, passieren den Strahlteiler 8 und werden anschließend von der Kollimatorlinse 9 kollimiert. Dies erzeugt viele um unterschiedliche Beträge zueinander verkippte Wellenfronten. Diese propagieren durch das Interferometerobjektiv 10, welches die sphärische Grundform des Prüflings kompensiert. Unter einer Kompensation wird dabei hier verstanden, dass das Interferometer Wellenfronten erzeugt, welche die gleiche sphärische Grundform wie die zu vermessende, reflektierende Oberfläche 11 des Prüflings besitzen. Nach der Reflektion am Prüfling propagiert das Licht zurück und wird am Strahlteiler 8 in den Kameraarm des Strahlenganges reflektiert. Dort passiert das Licht die Interferometerblende 12, welche sich in der Fourierebene des Interferometers befindet. Anschließend passiert das Licht die Abbildungsoptik 13, welche den Prüfling auf die Kamera 14 abbildet. Die Polarisation des Lichts im Referenzarm wird durch ein A/2-Plättchen 15 um 90° gedreht. Das Licht wird mittels zweier Spiegel 16 und 17 umgelenkt, wobei einer dieser Spiegel sich mittels eines Piezoaktuators 21 um wenige µm verschieben lässt, um Messungen mittels Phasenschieben aufnehmen zu können. Anschließend wird der Strahl durch ein Kepler-Fernrohr, welches aus einem Mikroskopobjektiv 18 und einer Kollimationslinse 19 besteht, aufgeweitet. Danach wird das Licht der Referenzwelle durch die Linse 20 auf die Mitte der Blende 12 fokussiert. Nach Passieren der Abbildungsoptik 13 interferiert das Licht auf der Kamera 14 mit dem Licht der am Prüfling reflektierten Objektwellen. Das Interferometer besitzt eine zentrale optische Achse 22, die durch die Krümmungsmittelpunkte der optischen Flächen der Kollimatorlinse geht.

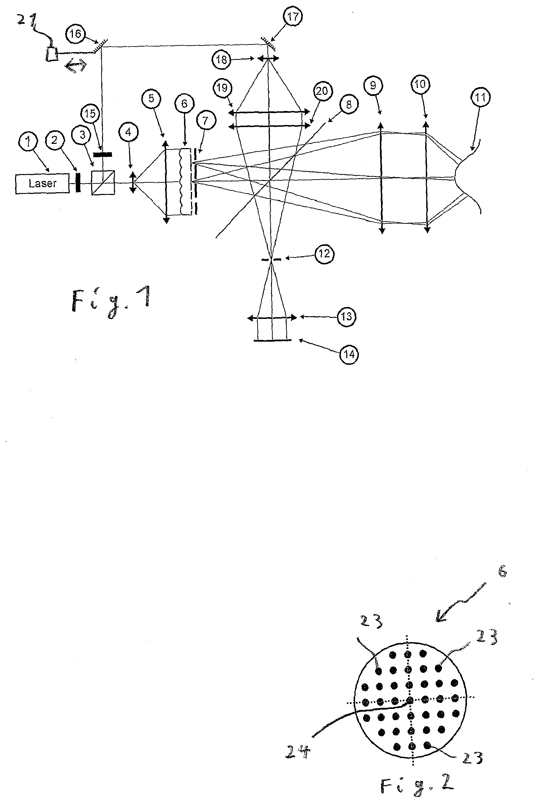

Figur 2 zeigt eine Ansicht eines Punktlichtquellenarrays 6, wie sie sich einem Betrachter bietet, der zum Beispiel vom Ort des Kollimators 9 aus der Figur 1 auf das Punktlichtquellenarray 6 schaut.

Das Punktlichtquellenarray 6 enthält hier eine in Zeilen und Spalten regelmäßige Anordnung von Punktlichtquellen 23. Diese Anordnung weist insbesondere eine Punktlichtquelle 24 auf, die auf der genannten zentralen Achse liegt und die damit eine zentral angeordnete Punktlichtquelle 24 darstellt. Die zentrale Achse steht in der Figur 2 senkrecht auf der Zeichnungsebene im Schnittpunkt der beiden gepunktet dargestellten Geraden.

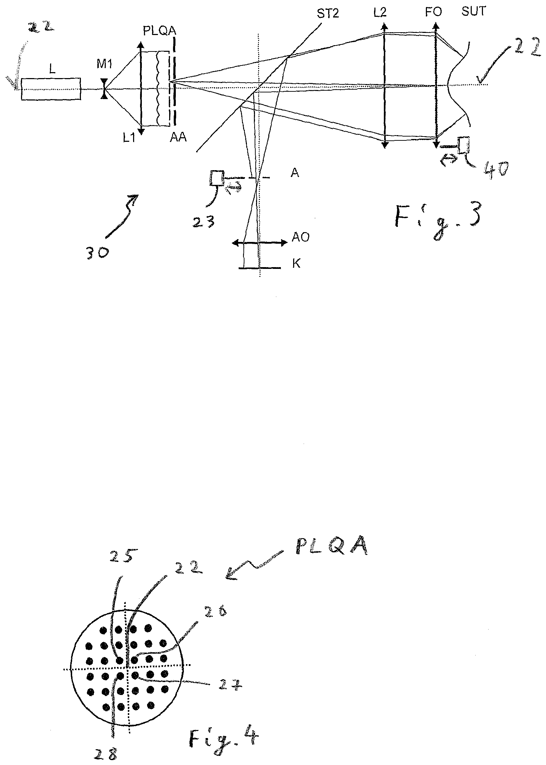

Figur 3 zeigt ein Ausführungsbeispiel eines erfindungsgemäßen Interferometers 30 zusammen mit einem Objektstrahlengang. Der Lichtstrahl einer kohärenten Laserquelle L wird durch ein Fernrohr, bestehend aus einem Mikroskopobjektiv M1 und einer Kollimationslinse L1 aufgeweitet und trifft auf ein Punktlichtquellenarray PLQA, welches, wie im bisherigen Aufbau, aus einem Substrat mit Mikrolinsenarray auf der Vorderseite und Pinholearray (Lochblendenarray) auf der Rückseite besteht. Die Vorderseite ist die dem einfallenden Laserlicht zugewandte Seite, und die Rückseite ist die der Lochblende zugewandte Seite. Das Punktlichtquellenarray PLQA unterscheidet sich von dem Punktlichtquellenarray 6 aus der Figur 2 insbesondere dadurch, dass seine Punktlichtquellen in Bezug auf die zentrale Achse des optischen Systems des Interferometers anders angeordnet sind. Figur 4 zeigt eine Ansicht eines solchen Punktlichtquellenarrays PLQA in einer mit der Erfindung kompatiblen Anordnung. Dabei zeigt die Figur 4 eine Ansicht, wie sie sich einem Betrachter bietet, der zum Beispiel vom Ort des Kollimators L2 auf das Punktlichtquellenarray schaut. Der wesentliche Unterschied des hier verwendeten Punktlichtquellenarrays PLQA zum Punktlichtquellenarray 6 aus der Figur 2 ist, dass das in der Figur 4 dargestellte Punktlichtquellenarray PLQA in seiner Anordnung im Interferometer keine zentrale Quelle besitzt. Je nach Stellung des Lochblendenarrays AA ist eine der vier Punktlichtquellen 25, 26, 27, 28, welche um die zentrale optische Achse 22 herum liegen, aktiv (Zusammen mit der jeweils aktiven Punktlichtquelle ist insgesamt jeweils jede vierte Punktlichtquelle aktiv). Auch hier steht die zentrale Achse senkrecht auf der Zeichnungsebene der Figur 4 im Schnittpunkt der beiden gepunktet dargestellten Geraden. Die der optischen Achse am nächsten liegend angeordneten Punktlichtquellen 25, 26, 27 und 28 zeichnen sich gegenüber den anderen, als gleichgroße Punkte dargestellten und weiter außen liegenden Punkten dadurch aus, dass sie neben der Prüfwellenfront einen Fizeau-Reflex als Referenzwelle erzeugen.

Im Folgenden wird wieder auf die Darstellung eines Ausführungsbeispiels in der Figur 3 Bezug genommen. Als Laserquelle L wird in einer bevorzugten Ausgestaltung ein He-Ne-Laser der Wellenlänge λ = 633 nm mit 10 mW Leistung verwendet. Diese Ausgestaltung ist zur Vermessung von Optiken für sichtbares Licht sinnvoll. Je nach Anwendung können auch andere Lichtquellen mit anderen Leistungen und/oder anderen Wellenlängen sinnvoll sein, beispielsweise ein Laser mit einer Wellenlänge von 532 nm mit 50 mW Leistung.

Das Licht der Punktlichtquellen propagiert weiter durch den Strahlteiler ST2 und wird von der Kollimationslinse L2 kollimiert. Durch das Fizeau-Objektiv FO werden die zueinander verkippten ebenen Wellenfronten, die von den aktiven Punktlichtquellen ausgehen, in sphärische Wellenfronten umgewandelt, um die sphärische Grundform des Prüflings zu kompensieren. Bei der Vermessung von Schmidt-Platten oder ähnlichen Prüflingen ohne Grundkrümmung wird eine plane Fizeau-Fläche verwendet. Nach der Reflektion am Prüfling SUT (surface under test) propagiert das Licht zurück zum Strahlteiler ST2 und wird in den Abbildungsarm / Kameraarm des Strahlenganges reflektiert.

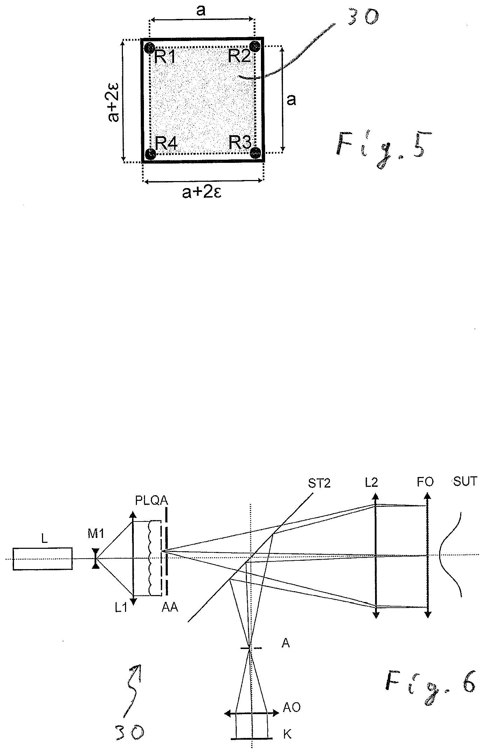

In der Fourierebene des Aufbaus befindet sich die Interferometerblende A. Figur 5 zeigt eine bevorzugte Ausgestaltung, bei der die Interferometerblende eine quadratische Öffnung 30 besitzt. Der außerhalb der Öffnung und die Öffnung umgebende Bereich der Blende ist intransparent.

Wenn für die Auswertung des Interferogramms ein Trägerfrequenzverfahren verwendet wird, ist die Blendenöffnung bevorzugt mindestens so groß, dass die Streifendichte des Interferogramms, welches entsteht, wenn eine Wellenfront, deren Gradient durch die Blende begrenzt ist, mit einer ebenen Referenzwelle interferiert, maximal die halbe Nyquistfrequenz der Kamera erreicht.

Die Dichte der Kamera-Pixel soll nach Nyquist mindestens doppelt so groß wie die durch die Interferenz erzeugte Streifendichte auf der Kamera sein, um die Streifen hinreichend deutlich getrennt darstellen zu können. Dabei stellt die Streifendichte gewissermaßen ein Signal mit der räumlichen Streifenwiederholungsfrequenz und die Pixeldichte die räumliche Abtastfrequenz dar. Die räumliche Streifenwiederholungsfrequenz auf der Kamera hängt von der lichten Weite der Interferometerblende und der Brennweite des Kollimators ab.

Die in der Fourierebene angeordnete Blende stellt für die Raumfrequenzen des Lichtes einen Tiefpassfilter dar und filtert so hohe Raumfrequenzen (gemessen in Linien pro mm) aus. Die Kantenlänge a der quadratischen Blendenöffnung definiert damit eine Grenze für Raumfrequenzen, die die Blende passieren. Je kleiner die Kantenlänge ist, desto niedriger liegt die Grenze der Raumfrequenz. Ein bestimmter Wert der Kantenlänge der quadratischen Blendenöffnung entspricht der Nyquistfrequenz der Kamera.

Ist die Blende größer, wird das von der Optik erzeugte Streifenmuster feiner als die Pixelauflösung der Kamera, so dass es sich von der Kamera nicht auflösen lässt. Ist die Blende kleiner, wird das von der Optik erzeugte Streifenmuster gröber als die Pixelauflösung der Kamera, was einen Verlust an Ortsauflösung bedeutet. Die Kantenlänge entspricht bevorzugt der Nyquistfrequenz der Kamera K. Die Punkte R1 bis R4 repräsentieren die Foki der vier letztlich von den Lichtquellen 25 - 27 aus der Figur 4 ausgehenden und an der Fizeau-Fläche reflektierten Referenzwellen. Der quadratische Bereich der Kantenlänge a ist der Bereich der gültigen Strahlen der Objektwellen im mathematischen Modell. Die physikalisch vorhandene Blende ist bevorzugt noch um eine zusätzliche Länge (2 mal ε) größer, so dass Beugungseffekte am Rand vermieden werden. Dabei ist ε bevorzugt kleiner als a/10.

Für die Auswertung verwendbare und diesem Sinne gültige Strahlen der Objektwellen befinden sich aber nur innerhalb der halben Nyquistfrequenz (Abstand a/2 von der Mitte der Blende entfernt). Nach der Blende passiert das Licht die Abbildungsoptik AO und trifft auf die Kamera K.

Figur 6 zeigt das Interferometer aus der Figur 3 mit einem Referenzstrahlengang. Die Referenzwellenfront wird, anders als beim bisherigen Tilted Wave Interferomter, mittels einer Fizeau-Fläche erzeugt. Diese ist typischerweise die letzte Fläche des Objektivs FO. Eine Fizeau-Fläche zeichnet sich dadurch aus, dass sie einen Teil der einlaufenden Prüfwelle reflektiert. Der reflektierte Teil trägt zum Beispiel 2 % bis 6 % der Energie der einlaufenden Prüfwelle und stellt die Referenzwelle für diese Prüfwelle, bzw. für deren als Objektwelle am Prüfling reflektierenden Teil dar. Je nach Stellung des Lochblendenarrays AA ist eine der vier Punktlichtquellen, welche um die zentrale optische Achse herum liegen, aktiv.

Das Licht der aktiven Quelle propagiert durch den Strahlteiler ST2 und wird anschließend von der Linse L2 kollimiert. Anschließend wird es an der Fizeau-Fläche des Objektivs FO reflektiert und propagiert zurück zum Strahlteiler ST2, wo es in den Kameraarm reflektiert wird. Es passiert die Blende AO in einer der vier Ecken der quadratischen Blendenöffnung, was der halben Nyquistfrequenz entspricht, und interferiert nach Passieren der Abbildungsoptik AO mit der Prüfwelle auf der Kamera K.

Die erläuterte Ausgestaltung mit dem Quadrat stellt nur den Spezialfall für n = 4 des allgemeineren Falls eines n-Ecks dar. Da die Position des Durchtritts der Referenzwellenfront durch die Fourierebene immer in einer der vier Ecken der Blende liegt, liegen die Strahlen mit der in der Fourierebene maximalen Entfernung von der Referenzwelle in der gegenüberliegenden Ecke. Dadurch ist die Streifendichte des aus der Objektwelle und der Referenzwelle gebildeten Interferogramms auf das Intervall zwischen Null (kein Streifen) und der Nyquistfrequenz (maximale Streifendichte) beschränkt. Da die Blende im Vergleich zum bisherigen Tilted Wave Entwurf nur die halbe lichte Weite hat, muss bei gleichbleibender Pixelauflösung auch der Abstand der Quellen im Punktlichtquellenarray PLQA halbiert werden.

Weil die Interferometerblende nur die Objektwellen durchlässt, die mit einem ähnlichen Winkel wie die Referenzwelle in die Kamera einfallen, blendet sie gleichzeitig die reflektierten Objektwellen aus, die nicht zu auswertbaren Streifen führen würden. Für jede von einer Punktlichtquelle ausgehende Objektwelle ergibt sich so auf der Kamera wenigstens ein abgegrenzter Bereich, der auswertbar ist. Dabei wird unter einem auswertbaren Bereich ein Streifenmuster mit auflösbaren Streifen verstanden. Der oder die Bereiche anderer Objektwellen liegen woanders. Jeder dieser Bereiche enthält im Ergebnis Information über einen anderen Teil der Oberfläche des Prüflings. Aufgrund der klaren Abgrenzung der Bereiche werden bevorzugt viele Objektwellen gleichzeitig eingeschaltet.

Durch die verkippte Referenzwelle ist somit immer eine Trägerfrequenz auf dem Interferogramm vorhanden, so dass es möglich ist, Trägerfrequenzverfahren zur Bestimmung der sich im Interferogramm abbildenden Phasendifferenzen zu verwenden.

Trägerfrequenzverfahren sind den Fachleuten, die mit dem Entwurf von Interferometern und dem Auswerten von Interferogrammen beschäftigen, vertraut und müssen daher hier nicht näher erläutert werden. Als Beispiel wird auf das Direct100 - Interferometer der Firma Zeiss verwiesen, dass in der Veröffentlichung "New Zeiss interferometer" beschrieben wird. Bekannt ist auch das Takeda-Verfahren, das in der eingangs genannten Veröffentlichung "Fouriertransform method of fringe-pattern analysis for computerbased topography and interferometry" beschrieben wird, und das eine sehr recheneffiziente Methode zur Berechnung der Phase aus einem Interferogramm darstellt.

Alternativ zur Auswertung über Trägerfrequenzverfahren kann nach wie vor auch ein Phasenschiebeverfahren verwendet werden. Der Vorteil hierbei ist, dass der Teil der Nyquistfrequenz, der bei der ersten Version für die Trägerfrequenz benötigt wird, nun für die Prüfwellenfront zur Verfügung steht, so dass die doppelte Streifendichte pro Interferenzmuster zur Verfügung steht.

Die Blende in der Fourierebene ist hier doppelt so groß wie bei Trägerfrequenzverfahren und der Abstand der Mikrolinsen kann ebenfalls verdoppelt werden.

Da die Referenzwelle nach wie vor verkippt ist, muss hier die Blende A je nach Position des Lochblendenarrays AA ebenfalls verschoben werden, wie es in der Figur 6 dargestellt ist.

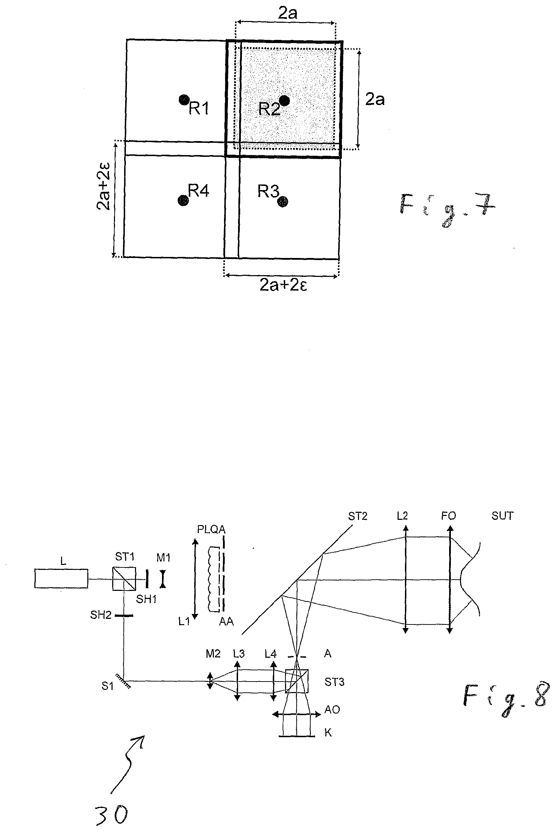

Figur 7 zeigt im Einzelnen eine quadratische Interferometerblende in der Fourierebene in vier verschiedenen Verschiebepositionen.

Der quadratische Bereich der Kantenlänge 2a ist der Bereich der gültigen Strahlen der Objektwellen im mathematischen Modell. Die physikalisch vorhandene Blende ist bevorzugt noch um eine zusätzliche Länge (2 mal ε) größer, so dass Beugungseffekte am Rand vermieden werden.

Welche der beiden Anordnungen besser geeignet ist, hängt von der jeweiligen Messaufgabe und/der den Umgebungsbedingungen ab.

Um sicher zu gehen, dass jeder Punkt der Oberfläche des Prüflings mit mindestens einer Objektwelle ausgewertet wird, sieht eine bevorzugte Ausgestaltung eine Auslegung des Interferometers vor, bei der sich die auswertbaren Bereiche verschiedener Objektwellen von verschiedenen Punktlichtquellen überlappen.

Um zu vermeiden, dass sich die Interferenzen in den überlappenden Bereichen stören, wird nur eine Auswahl an Objektwellen gleichzeitig eingeschaltet, zum Beispiel jede vierte. Das heißt, in dem Punktlichtquellenarray PLQA wird nur ein Viertel der vorhandenen Punktlichtquellen gleichzeitig aktiviert. In der nächsten Messung wird wieder jede vierte Objektwelle, aber andere Objektwellen benutzt, etc. Nach vier Messungen wurden also alle Objektwellen einmal benutzt und jeder Punkt der Oberfläche des Prüflings wurde mit mindestens einer Objektwelle auswertbar abgetastet.

Ein Rechner steuert die Aktivität der einzelnen Punktlichtquellen des Punktlichtquellen-Arrays, speichert die für jeden Beleuchtungszustand des Prüflings und damit für jeden der geschalteten Zustände (transparent/intransparent) von Punktlichtquellen des Punktlichtquellen-Arrays von der Kamera aufgenommenen Interferogramme, und bestimmt die Abmessungen der Oberfläche des Prüflings durch eine Auswertung der Intensitätsverteilungen der gespeicherten Interferogramme.

Wie bereits weiter oben erwähnt wurde, besteht ein Nachteil der hier vorgestellten neuen Anordnung darin, dass es keine zentrale Quelle mehr gibt. Der Vorteil einer zentralen Quelle ist, dass bei der Vermessung von rotationssymmetrischen Asphären die Symmetrie genutzt werden kann, um die Justage zu vereinfachen.

Figur 8 zeigt ein weiteres Ausführungsbeispiel der Erfindung. Dieses Ausführungsbeispiel zeichnet sich durch einen weiteren Interferometerarm aus, durch den eine zentrale Quelle zu einem erfindungsgemäßen Interferometer hinzugefügt wird. Das Licht des Lasers wird dazu vom zusätzlichen Strahlteiler ST1 über den zusätzlichen Spiegel S2 umgelenkt und von einem zusätzlichen Fernrohr, bestehend aus Mikroskopobjektiv M3 und Linse L3 aufgeweitet. Von der zusätzlichen Linse L4 wird das Licht wieder fokussiert und mit Hilfe des zusätzlichen Strahlteilers ST3 in den Abbildungsarm eingekoppelt. Der zusätzliche Strahlteiler ST3 befindet sich im Strahlengang des Interferometers zwischen der Interferometerblende A und der Abbildungsoptik AO im Kameraarm des Interferometers. Von hier propagiert das Licht zum Strahlteiler ST2 und nimmt ab hier denselben Weg wie eine Prüfwelle aus dem Punktlichtquellenarray PLQA. Die Referenzwelle wird ebenfalls über einen Fizeau-Reflex erzeugt. Da die Welle zentral steht, ist die Referenzwelle nicht verkippt, und es entsteht ein Interferogramm ohne Trägerfrequenz.

Um die Phase auszuwerten, können hier wieder Phasenschiebeverfahren verwendet werden, indem das Fizeau-Objektiv FO mit einem Aktuator 40 verschoben wird. Eine bevorzugte Ausgestaltung zeichnet sich daher durch einen Fizeau Aktuator 40 aus, der dazu eingerichtet ist, das Fizeau-Objektiv FO längs der optischen Achse 22 zu verschieben. Alternativ ist auch das Schieben der Wellenlänge möglich. Um zwischen den beiden Betriebsmodi (Trägerfrequenz oder zentrale Quelle) umschalten zu können, sind in der Beleuchtung zusätzlich zwei Shutter SH1, SH2 verbaut, welche es erlauben, den jeweils nicht benötigten Strahlengang zu blockieren. Eine bevorzugte Ausgestaltung zeichnet sich daher durch einen ersten Shutter und einen zweiten Shutter aus. Der erste Shutter SH1 ist zwischen dem zusätzlichen Strahlteiler ST1 und dem Mikroskopobjektiv M1 angeordnet. Der zweite Shutter SH2 ist zwischen dem zusätzlichen Strahlteiler ST1 und dem zusätzlichen Spiegel S1 angeordnet.

## Patentansprüche

1. Interferometer zur flächenhaften Vermessung einer optisch glatten Oberfläche, mit Mitteln zum Beleuchten eines zu vermessenden Oberflächenbereiches der Oberfläche mit mehreren Objektwellen aus verschiedenen Richtungen, und mit Mitteln, die an der Oberfläche reflektierte Objektwellen mit einer zu mehreren Objektwellen kohärenten Referenzwelle auf einem Detektor zu einem Interferogramm überlagern, in dem sich Abmessungen der Oberfläche abbilden, wobei das Interferometer dazu eingerichtet ist, die Oberfläche gleichzeitig mit mehreren Objektwellen zu beleuchten und die Referenzwelle durch eine Fizeau-Strahlteilerplatte oder ein Fizeau-Objektiv zu erzeugen, mithin also durch Strahlteilung aus einer der Objektwellen, die die Oberfläche (11) beleuchten, zu erzeugen, wobei das Interferometer eine im Strahlengang vor dem Detektor (14) angeordnete Interferometerblende (12) und eine Abbildungsoptik aufweist, wobei sich die Interferometerblende in der oder etwas außerhalb der Fourierebene der Abbildungsoptik befindet und die von der Oberfläche reflektierten Objektwellen filtert, wobei das Interferometer eine starre Anordnung von schaltbaren Punktlichtquellen als die Mittel zum Beleuchten aufweist, **dadurch gekennzeichnet, dass** das Interferometer dazu eingerichtet ist, die optisch glatte Oberfläche bei ihrer Vermessung mit verschiedenen Auswahlen von sich unterscheidenden Objektwellen zu beleuchten, wobei jede Auswahl eine eigene Referenzwelle erzeugt, die bei einer mit einer anderen Auswahl erfolgenden Beleuchtung ausgeschaltet ist, und dass diese Punktlichtquellen und die Interferometerblende (12) so ausgelegt sind, dass bei jeder Messwertaufnahme nur eine Referenzwellenfront den Detektor (14) erreicht und diesen vollständig ausleuchtet.

2. Interferometer nach Anspruch 1, **dadurch gekennzeichnet, dass** die starre Anordnung der Punktlichtquellen ein regelmäßiges Raster bildet und dass sich am Durchstoßpunkt (D) der optischen Achse des Interferometers mit diesem regelmäßigen Raster keine Punktlichtquelle befindet und dass n = drei oder mehr Punktlichtquellen symmetrisch in gleichem Abstand um den Durchstoßpunkt (D) angeordnet sind, deren Objektwellen die Referenzwellen am Fizeauobjektiv oder der Fizeauplatte erzeugen.

3. Interferometer nach einem der vorherigen Ansprüche, **dadurch gekennzeichnet, dass** die Interferometerblende (12) während der Messung nicht beweglich und so ausgelegt ist, dass sie gleichzeitig die Referenzwellenfronten, die von mehreren Objektwellenfronten erzeugt werden, auf den Detektor gelangen lassen würde, und dass das Interferometer eine Vorrichtung aufweist, vorzugsweise ein bewegliches Blendenarray, die die Auswahlen der Objektwellenfronten so festlegt, dass pro Messwertaufnahme nur eine Objektwellenfront eine Referenzwellenfront erzeugt, die zum Detektor gelangt.

4. Interferometer nach Anspruch 3, **dadurch gekennzeichnet, dass** zur Auswahl der genau einen Referenzwellenfront auf dem Detektor ein Blendenarray zur Auswahl der diese Referenzwellenfront erzeugenden Objektwellenfront vorhanden ist.

5. Interferometer nach einem der vorhergehenden Ansprüche, **dadurch gekennzeichnet, dass** die Interferometerblende (12) beweglich und so positionierbar ist, dass für jede Messwertaufnahme das Licht genau einer Referenzwellenfront zum Detektor gelangt.

6. Interferometer nach einem der vorhergehenden Ansprüche, **dadurch gekennzeichnet, dass** die Interferometerblende (12) so dimensioniert ist, dass sie nur Objektwellen mit Einfallswinkeln auf den Detektor leitet, die dem Einfallswinkel der Referenzwelle so ähnlich sind, dass auf dem Detektor Teilbereiche mit auswertbaren Streifen in den Interferogrammen generiert werden.

7. Interferometer nach Anspruch 6, **dadurch gekennzeichnet, dass** das Interferometer so ausgelegt ist, dass sich aus verschiedenen Objektwellen resultierende Teilbereiche des Interferogramms mit auswertbaren Streifen auf dem Detektor überlappen.

8. Interferometer (30) nach einem der vorhergehenden Ansprüche, **gekennzeichnet durch** ein Punktlichtquellen-Array (PLQA) und ein im Lichtweg von Licht, das von dem Punktlichtquellen-Array (PLQA) ausgeht, hinter dem Punktlichtquellen-Array (PLQA) angeordnetes optisches System aus einem Kollimator (L2), einem Interferometerobjektiv (FO) als Mittel zum Beleuchten, und durch einen Strahlteiler (ST2), eine Interferometerblende (A)und eine Abbildungsoptik (AO) als Mittel zum Überlagern und durch eine Kamera (K), wobei die Interferometerblende (A) in der Fourierebene der Abbildungsoptik (AO) zwischen der Abbildungsoptik (AO) und dem Strahlteiler angeordnet ist, und wobei die Lichtquellen (25, 26, 27, 28) in dem Lichtquellen-Array (PLQA) in Zeilen und Spalten in einem regelmäßigen Abstand voneinander angeordnet sind, und wobei eine zentrale Achse (22) des Interferometers eine Normale eines n-Ecks bildet, auf dessen Ecken je eine von n einander benachbarten Punktlichtquellen (25, 26, 27, 28) liegt, und wobei die Normale auf einem Mittelpunkt des n-Ecks steht.

9. Interferometer (30) nach Anspruch 8, **dadurch gekennzeichnet, dass** die Interferometerblende (A) eine n-eckige oder kreisförmige Öffnung besitzt.

10. Interferometer (30) nach Anspruch 9, **dadurch gekennzeichnet, dass** die Kantenlänge der n-eckigen Öffnung mindestens so groß ist wie eine Kantenlänge a, bei der die Streifendichte des Interferogramms, welches entsteht, wenn eine Wellenfront, deren Gradient durch die Interferometerblende (A) begrenzt ist, mit einer ebenen Referenzwelle interferiert, maximal die halbe Nyquistfrequenz der Kamera (K) erreicht.

11. Interferometer (30) nach Anspruch 10, **dadurch gekennzeichnet, dass** die Kantenlänge a noch um eine zusätzliche Länge 2 mal ε größer ist, wobei ε kleiner als a/10 ist.

12. Interferometer (30) nach einem der vorhergehenden Ansprüche, **dadurch gekennzeichnet, dass** es einen zusätzlichen Interferometerarm aufweist, der eine zentrale, auf einer optischen Achse liegende Punktlichtquelle erzeugt

13. Interferometer (30) nach Anspruch 12, **dadurch gekennzeichnet, dass** der zusätzliche Interferometerarm einen Strahlteiler (ST1), einen Spiegel (S1), ein Fernrohr, bestehend aus einem Mikroskopobjektiv (M2) und einer Linse (L3), eine Linse (L4) und einen weiteren Strahlteiler (ST3) aufweist, wobei der Strahlteiler (ST1) dazu eingerichtet und angeordnet ist, Licht eines Lasers (L) des Interferometers (30) über den zusätzlichen Spiegel (S1) in das Fernrohr umzulenken, das Fernrohr dazu eingerichtet ist, das vom Spiegel (S1) her einfallende Lichtbündel aufzuweiten und auf die zusätzliche Linse (L4) zu richten, welche dazu eingerichtet und angeordnet ist, das aufgeweitete Lichtbündel zu fokussieren und auf den weiteren Strahlteiler (ST3) zu richten, wobei dieser im Strahlengang des Interferometers (30) zwischen der Interferometerblende (A) und der Abbildungsoptik (AO) im Kameraarm des Interferometers (30) angeordnet und dazu eingerichtet ist, von der zusätzlichen Linse (4) her einfallendes Licht in den Kameraarm des Interferometers (30) einzukoppeln.

14. Interferometer (30) nach Anspruch 13, **dadurch gekennzeichnet, dass** das Interferometer (30) einen Fizeau-Objektiv-Aktuator (40) aufweist, der dazu eingerichtet ist, das Fizeau-Objektiv längs der optischen Achse (22) zu verschieben, und dass das Interferometer (30) einen ersten Shutter (SH1) und einen zweiten Shutter (SH2) aufweist, welche dazu eingerichtet und angeordnet sind, jeweils einen vom Stahlteiler (ST1) ausgehenden Strahlengang gesteuert zu blockieren oder nicht zu blockieren.

15. Verfahren zur flächenhaften Vermessung einer optisch glatten Oberfläche, bei dem ein zu vermessender Oberflächenbereich der Oberfläche mit mehreren, insbesondere n Objektwellen aus verschiedenen Richtungen beleuchtet wird, und die an der Oberfläche reflektierten Objektwellen mit einer zu mehreren Objektwellen kohärenten Referenzwelle auf einem Detektor zu einem Interferogramm überlagert werden, in dem sich Abmessungen der Oberfläche abbilden, wobei die Oberfläche gleichzeitig mit mehreren Objektwellen beleuchtet wird, die Referenzwelle durch eine Fizeau-Strahlteilerplatte oder ein Fizeau-Objektiv erzeugt wird, mithin also durch Strahlteilung aus einer der Objektwellen, die die Oberfläche (11) beleuchten, und wobei die von der Oberfläche reflektierten Objektwellen durch eine im Strahlengang vor dem Detektor (14) angeordnete Interferometerblende (12), die sich in der oder etwas außerhalb der Fourierebene einer Abbildungsoptik befindet, gefiltert werden, wobei die Objektwellen durch eine starre, rasterförmige Anordnung von Punktlichtquellen erzeugt werden, **dadurch gekennzeichnet, dass** die optisch glatte Oberfläche bei ihrer Vermessung mit verschiedenen Auswahlen von sich unterscheidenden Objektwellen beleuchtet wird, wobei jede Auswahl eine eigene Referenzwelle erzeugt, die bei einer mit einer anderen Auswahl erfolgenden Beleuchtung ausgeschaltet ist und wobei die den Detektor erreichende und dort mit den Objektwellen interferierende Referenzwelle bei jeder Messwertaufnahme aus genau einer Punktlichtquelle stammt und den Detektor vollständig ausleuchtet.

16. Verfahren nach Anspruch 15, **dadurch gekennzeichnet, dass** eine Messung aus mehreren Messwertaufnahmen besteht und dass für die verschiedenen Messwertaufnahmen verschiedene Auswahlen von sich unterscheidenden Objektwellen verwendet werden dergestalt, dass durch die verschiedenen Messwertaufnahmen jeder zu vermessende Punkt der Oberfläche (11) mindestens einmal durch eine Objektwelle beleuchtet wird, die zum Detektor gelangt.

## Claims

1. Interferometer for areally measuring an optically smooth surface, comprising means for illuminating a surface region, to be measured, of the surface with a plurality of object waves from different directions, and means which, on a detector, superimpose object waves reflected at the surface onto a reference wave that is coherent with a plurality of object waves in order to form an interferogram in which dimensions of the surface are imaged, the interferometer being configured to illuminate the surface with a plurality of object waves at the same time and produce the reference wave by way of a Fizeau beam splitter plate or a Fizeau objective, and thus by means of beam splitting from one of the object waves that illuminate the surface (11), the interferometer comprising an interferometer stop (12) that is arranged within the beam path upstream of the detector (14), and imaging optics, the interferometer stop being situated within, or slightly outside of, the Fourier plane of the imaging optics and said interferometer stop filtering the object waves reflected by the surface, wherein the interferometer has a rigid arrangement of switchable point light sources as the illumination means, **characterized in that** the interferometer is designed to illuminate the optically smooth surface, during the measurement thereof, with different samples of mutually differing object waves, each sample producing its own reference wave that is deactivated when illumination with a different sample occurs, and **in that** these point light sources and the interferometer stop (12) are designed such that, for each measured value recording, just one reference wave front reaches the detector (14) and completely illuminates said detector.

2. Interferometer according to claim 1, **characterized in that** the rigid arrangement of the point light sources forms a regular grid, and **in that** no point light source is located at the point (D) where the optical axis of the interferometer intersects with said regular grid, and **in that** n = three or more point light sources are arranged symmetrically and so as to be equally spaced around the intersection point (D), the object waves of which point light sources produce the reference waves on the Fizeau objective or the Fizeau plate.

3. Interferometer according to any of the preceding claims, **characterized in that** the interferometer stop (12) is immovable during the measurement and is designed so as to allow the reference wave fronts, produced by a plurality of object wave fronts, to reach the detector at the same time, and **in that** the interferometer comprises a suitable device, preferably a movable stop array, that specifies the samples of the object wave fronts such that, for each measured value recording, just one object wave front produces a reference wave front that reaches the detector.

4. Interferometer according to claim 3, **characterized in that**, in order to select the precisely one reference wave front, a stop array is provided on the detector for selecting the object wave front that produces said reference wave front.

5. Interferometer according to any of the preceding claims, **characterized in that** the interferometer stop (12) is movable and can be positioned such that, for each measured value recording, the light from precisely one reference wave front reaches the detector.

6. Interferometer according to any of the preceding claims, **characterized in that** the interferometer stop (12) is dimensioned so as to guide to the detector only object waves that have an angle of incidence that is so similar to the angle of incidence of the reference wave that portions having evaluable fringes in the interferograms are generated on the detector.

7. Interferometer according to claim 6, **characterized in that** the interferometer is designed such that portions of the interferogram that have evaluable fringes and result from different object waves overlap on the detector.

8. Interferometer (30) according to any of the preceding claims, **characterized by** a point light source array (PLSA) and an optical system that consists of a collimator (12), and an interferometer objective (FO) as an illumination means and that is arranged downstream of the point light source array (PLSA) within the optical path of light emanating from the point light source array (PLSA), and by a beam splitter (ST2), an interferometer stop (A), and imaging optics (AO) as a superimposition means, and by a camera (K), the interferometer stop (A) being arranged within the Fourier plane of the imaging optics (AO), between the imaging optics (AO) and the beam splitter, and the light sources (25, 26, 27, 28) within the light source array (PLSA) being arranged in rows and columns and so as to be equally mutually spaced, and a central axis (22) of the interferometer forming a normal of an n-gon, on each corner of which one of n mutually adjacent point light sources (25, 26, 27, 28) is located, and the normal being located on a midpoint of the n-gon.

9. Interferometer (30) according to claim 8, **characterized in that** the interferometer stop (A) has an n-gonal or circular aperture.

10. Interferometer (30) according to claim 9, **characterized in that** the edge length of the n-gonal aperture is at least equal to an edge length a, where the fringe density of the interferogram, which density occurs when a wave front of which the gradient is limited by the interferometer stop (A) interferes with a planar reference wave, reaches at most half the Nyquist frequency of the camera (K).

11. Interferometer (30) according to claim 10, **characterized in that** the edge length a is greater again by an additional length of twice ε, ε being less than a/10.

12. Interferometer (30) according to any of the preceding claims, **characterized in that** it comprises an additional interferometer arm that produces a central point light source located on an optical axis.

13. Interferometer (30) according to claim 12, **characterized in that** the additional interferometer arm comprises a beam splitter (ST1), a mirror (S1), a telescope consisting of a microscope objective (M2) and a lens (L3), a lens (L4), and a further beam splitter (ST3), the beam splitter (ST1) being designed and arranged so as to deflect light from a laser (L) of the interferometer (30), via the additional mirror (S1), and into the telescope, the telescope being designed to expand the light beam that is incident from the mirror (S1) and to direct said beam to the additional lens (L4) which is designed and arranged so as to focus the expanded light beam and direct it to the further beam splitter (ST3), said beam splitter being arranged in the camera arm of the interferometer (30), within the beam path of the interferometer (30), between the interferometer stop (A) and the imaging optics (AO), and being designed to couple light, incident from the additional lens (4), into the camera arm of the interferometer (30).

14. Interferometer (30) according to any of the preceding claims, **characterized in that** the interferometer (30) comprises a Fizeau objective actuator (40) that is designed to shift the Fizeau objective along the optical axis (22) and that the interferometer (30) comprises a first shutter (SH1) and a second shutter (SH2) that are designed and arranged so as to in each case block or not block, in a controlled manner, a beam path emanating from the beam splitter (ST1).

15. Method for areally measuring an optically smooth surface, in which a surface region, to be measured, of the surface is illuminated with a plurality of, in particular n, object waves from different directions, and the object waves reflected at the surface are superimposed, on a detector, onto a reference wave that is coherent with a plurality of object waves in order to form an interferogram in which dimensions of the surface are imaged, the surface being illuminated with a plurality of object waves at the same time, and the reference wave being produced by way of a Fizeau beam splitter plate or a Fizeau objective, and thus by means of beam splitting from one of the object waves that illuminate the surface (11), and the object waves reflected by the surface being filtered by an interferometer stop (12) that is arranged within the beam path upstream of the detector (14), and that is situated within, or slightly outside of, the Fourier plane of imaging optics, wherein the object waves are produced by means of a rigid, grid-like arrangement of switchable point light sources, **characterized in that** the optically smooth surface is illuminated, during the measurement thereof, with different samples of mutually differing object waves, each sample producing its own reference wave that is deactivated when illumination with a different sample occurs, and, for each measured value recording, the reference wave that reaches the detector and interferes there with the object waves originating from exactly one point light source and completely illuminating the detector.

16. Method according to claim 15, **characterized in that** a measurement consists of a plurality of measured value recordings, and **in that** different samples of mutually differing object waves are used for the different measured value recordings, in such a way that, as a result of the different measured value recordings, each point to be measured of the surface (11) is illuminated at least once by an object wave that reaches the detector.

## Revendications

1. Interféromètre pour la mesure planaire d'une surface optiquement lisse, comprenant un moyen d'éclairage d'une zone superficielle à mesurer de la surface par une pluralité d'ondes objets provenant de différentes directions et un moyen qui superpose des ondes objets réfléchies au niveau de ladite surface avec une onde de référence cohérente par rapport à une pluralité d'ondes objets sur un détecteur pour former un interférogramme au sein duquel des dimensions de la surface sont visualisées, dans lequel l'interféromètre est conçu pour éclairer la surface simultanément avec une pluralité d'ondes objets et pour générer l'onde de référence grâce à une plaque séparatrice de faisceau de Fizeau ou une lentille de Fizeau, et par conséquent par séparation de faisceau à partir d'une des ondes objets éclairant la surface (11), dans lequel l'interféromètre présente un diaphragme d'interféromètre (12), agencé devant le détecteur (14) sur le trajet de faisceau, et une optique d'imagerie, dans lequel le diaphragme d'interféromètre se trouve dans le ou légèrement en dehors du plan de Fourier de l'optique d'imagerie et filtre les ondes objets réfléchies par la surface, dans lequel l'interféromètre présente, en tant que moyen d'éclairage, un agencement rigide de sources de lumière ponctuelles commutables, **caractérisé en ce que** l'interféromètre est conçu pour éclairer la surface optiquement lisse, lors de la mesure de celle-ci, avec différentes sélections d'ondes objets différentes, dans lequel chaque sélection génère sa propre onde de référence qui est désactivée par un éclairage survenant avec une autre sélection, et lesdites sources de lumière ponctuelles et le diaphragme d'interféromètre (12) sont conçus de sorte qu'un seul front d'ondes de référence atteint le détecteur (14) et l'éclaire complètement à chaque enregistrement de valeur de mesure.

2. Interféromètre selon la revendication 1, **caractérisé en ce que** l'agencement rigide des sources de lumière ponctuelles forme un réseau régulier, et aucune source de lumière ponctuelle ne se trouve au point d'intersection (D) de l'axe optique de l'interféromètre avec ledit réseau régulier, et n = trois ou plus de trois sources de lumière ponctuelles, dont les ondes objets génèrent les ondes de référence au niveau de la lentille de Fizeau ou de la plaque de Fizeau, sont agencées de manière symétrique et avec le même espacement autour du point d'intersection (D).

3. Interféromètre selon l'une quelconque des revendications précédentes, **caractérisé en ce que** le diaphragme d'interféromètre (12) n'est pas mobile pendant la mesure et est conçu pour faire parvenir atteindre de manière simultanée sur le détecteur les fronts d'onde de référence générés par une pluralité de fronts d'ondes objets, et l'interféromètre présente un dispositif, de manière préférée un réseau de diaphragmes mobile, qui détermine les sélections des fronts d'ondes objets de sorte qu'un seul front d'ondes objets par enregistrement de valeur de mesure génère un front d'ondes de référence atteignant le détecteur.

4. Interféromètre selon la revendication 3, **caractérisé en ce qu'**un réseau de diaphragmes destiné à la sélection du front d'ondes objets générant ledit front d'ondes de référence est présent afin de sélectionner un front d'ondes de référence précis sur le détecteur.

5. Interféromètre selon l'une quelconque des revendications précédentes, **caractérisé en ce que** le diaphragme d'interféromètre (12) est mobile et peut être positionné de manière à ce que la lumière d'un front d'ondes de référence précis parvienne au détecteur pour chaque enregistrement de valeur de mesure.

6. Interféromètre selon l'une quelconque des revendications précédentes, **caractérisé en ce que** le diaphragme d'interféromètre (12) est dimensionné pour ne diriger que des ondes objets présentant des angles d'incidence sur le détecteur si proches de l'angle d'incidence de l'onde de référence que des sous-secteurs présentant des bandes évaluables sont générés sur le détecteur au sein des interférogrammes.

7. Interféromètre selon la revendication 6, **caractérisé en ce que** l'interféromètre est conçu de sorte que des sous-secteurs de l'interférogramme issus de différentes ondes objets chevauchent des bandes évaluables sur le détecteur.

8. Interféromètre (30) selon l'une quelconque des revendications précédentes, **caractérisé par** un réseau de sources de lumière ponctuelles (PLQA) et un système optique agencé derrière le réseau de sources de lumière ponctuelles (PLQA) sur le trajet optique de la lumière émanant du réseau de sources de lumière ponctuelles (PLQA) et constitué d'un collimateur (L2), d'un objectif d'interféromètre (FO) servant de moyen d'éclairage, et par un séparateur de faisceau (ST2), un diaphragme d'interféromètre (A) et une optique d'imagerie (AO) servant de moyen de superposition, et par une caméra (K), dans lequel le diaphragme d'interféromètre (A) est agencé dans le plan de Fourier de l'optique d'imagerie (AO) entre l'optique d'imagerie (AO) et le séparateur de faisceau, et dans lequel les sources de lumière (25, 26, 27, 28) du réseau de sources de lumière (PLQA) sont agencées en rangées et en colonnes à distance régulière les unes des autres, et dans lequel un axe central (22) de l'interféromètre forme une normale d'un polygone au niveau des angles duquel se trouve respectivement une parmi n sources de lumière ponctuelles (25, 26, 27, 28) adjacentes les unes aux autres, et dans lequel la normale se situe au centre du polygone.

9. Interféromètre (30) selon la revendication 8, **caractérisé en ce que** le diaphragme d'interféromètre (A) possède une ouverture polygonale ou circulaire.

10. Interféromètre (30) selon la revendication 9, **caractérisé en ce que** la longueur d'arête de l'ouverture polygonale est au moins égale à une longueur d'arête a, dans lequel la densité de bande de l'interférogramme, qui apparaît lorsqu'un front d'ondes dont le gradient est limité grâce au diaphragme d'interféromètre (A) interfère avec une onde de référence plate, atteint au maximum la moitié de la fréquence de Nyquist de la caméra (K).

11. Interféromètre (30) selon la revendication 10, **caractérisé en ce que** la longueur d'arête a présente une longueur supplémentaire correspondant à 2 fois ε, dans lequel ε est inférieur à a/10.

12. Interféromètre (30) selon l'une quelconque des revendications précédentes, **caractérisé en ce qu'**il présente un bras d'interféromètre supplémentaire qui génère une source de lumière ponctuelle centrale située sur un axe optique.

13. Interféromètre (30) selon la revendication 12, **caractérisé en ce que** le bras d'interféromètre supplémentaire présente un séparateur de faisceau (ST1), un miroir (S1), une lunette constituée d'un objectif de microscope (M2) et d'une lentille (L3), une lentille (L4) et un autre séparateur de faisceau (ST3), dans lequel le séparateur de faisceau (ST1) est conçu et agencé pour dévier dans la lunette la lumière provenant d'un laser (L) de l'interféromètre (30) par l'intermédiaire du miroir supplémentaire (S1), la lunette est conçue pour élargir le faisceau de lumière incident issu du miroir (S1) et le diriger sur la lentille (L4) supplémentaire qui est conçue et agencée pour focaliser le faisceau de lumière élargi et le diriger sur l'autre séparateur de faisceau (ST3), dans lequel ledit séparateur est agencé sur le trajet de faisceau de l'interféromètre (30) dans le bras de caméra de l'interféromètre (30) entre le diaphragme d'interféromètre (A) et l'optique d'imagerie (AO) et est conçu pour coupler la lumière incidente issue de la lentille (L4) supplémentaire dans le bras de caméra de l'interféromètre (30).

14. Interféromètre (30) selon la revendication 13, **caractérisé en ce que** l'interféromètre (30) présente un actionneur de lentille de Fizeau (40) conçu pour déplacer la lentille de Fizeau le long de l'axe optique (22), et l'interféromètre (30) présente un premier obturateur (SH1) et un second obturateur (SH2) qui sont conçus et agencés pour bloquer ou ne pas bloquer, de manière commandée, un trajet de faisceau sortant du séparateur de faisceau (ST1).

15. Procédé de mesure planaire d'une surface optiquement lisse, dans lequel une zone superficielle à mesurer de la surface est éclairée par plusieurs, en particulier n, ondes objets en provenance de différentes directions, et les ondes objets réfléchies sur la surface sont superposées avec une onde de référence cohérente par rapport à une pluralité d'ondes objets sur un détecteur pour former un interférogramme au sein duquel des dimensions de la surface sont visualisées, dans lequel la surface est éclairée simultanément avec une pluralité d'ondes objets, l'onde de référence est générée grâce à une plaque séparatrice de faisceau de Fizeau ou une lentille de Fizeau, et par conséquent par séparation de faisceau à partir d'une des ondes objets éclairant la surface (11), et dans lequel les ondes objets réfléchies par la surface sont filtrées grâce à un diaphragme d'interféromètre (12), agencé devant le détecteur (14) sur le trajet de faisceau, qui se trouve dans le ou légèrement en dehors du plan de Fourier d'une optique d'imagerie, dans lequel les ondes objets sont générées grâce à un agencement rigide, et en forme de réseau, de sources de lumière ponctuelles, **caractérisé en ce que** la surface optiquement lisse est éclairée, lors de la mesure de celle-ci, avec différentes sélections d'ondes objets différentes, dans lequel chaque sélection génère une onde de référence propre qui est désactivée par un éclairage survenant avec une autre sélection et dans lequel l'onde de référence qui atteint le détecteur et y interfère avec les ondes objets provient d'une source de lumière ponctuelle précise et illumine complètement le détecteur à chaque enregistrement de valeur de mesure.

16. Procédé selon la revendication 15, **caractérisé en ce qu'**une mesure est constituée d'une pluralité d'enregistrements de valeurs de mesure, et différentes sélections d'ondes objets différentes sont utilisées pour les différents enregistrements de valeurs de mesure, de sorte que, grâce aux différents enregistrements de valeurs de mesure, chaque point à mesurer de la surface (11) est éclairé au moins une fois par une onde objet qui parvient au détecteur.
